## Europäisches Patentamt

## European Patent Office

## Office européen des brevets

(19)

(11) Veröffentlichungsnummer: **0 195 221**
**B1**

(12) **EUROPÄISCHE PATENTSCHRIFT**

(45) Veröffentlichungstag der Patentschrift:
**12.07.89**

(21) Anmeldenummer: **86101553.5**

(22) Anmeldetag: **06.02.86**

(51) Int. Cl.⁴: **A 01 K 1/01,** A 01 K 1/035,
B 31 B 7/00, B 31 B 39/00,
B 65 D 75/38, B 65 D 75/62,
B 65 B 31/04

(54) **Katzen-Toilette, insbesondere hierfür verwendbare Folienpackung sowie Verfahren zu deren Herstellung.**

(30) Priorität: **08.11.85 DE 3539637**
**13.02.85 DE 3504798**

(43) Veröffentlichungstag der Anmeldung:
**24.09.86 Patentblatt 86/39**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**DE-A-2 613 659**
**FR-A-2 454 263**
**US-A-3 771 493**
**US-A-3 978 818**

(73) Patentinhaber: **Effem GmbH, Eitzer Landstrasse,
D-2810 Verden/Aller (DE)**

(72) Erfinder: **Kiel, Hans Richard, Elbinger Strasse 66,
D-2806 Oyten (DE)**

(74) Vertreter: **Goddar, Heinz J., Dr., FORRESTER &
BOEHMERT Widenmayerstrasse 4/I, D-8000
München 22 (DE)**

LIBER, STOCKHOLM 1989

## Beschreibung

Die Erfindung betrifft eine Folienpackung mit einem Beutel zur Aufnahme von füllfähigem Material, wie Katzenstreu oder dergleichen, ein Verfahren zur Herstellung einer derartigen Folienpackung sowie ihre Verwendung.

Katzen sind bekanntlich leicht daran zu gewöhnen, Urin und Kot in einem dafür eingerichteten Behälter abzusetzen. Derartige, als Katzen-Toiletten bezeichnete Behälter, die früher üblicherweise mit Sand gefüllt waren, werden heute zunehmend mit einem besonderen porösen, saugfähigen und geruchshemmenden Materials, sogenannter Katzenstreu, belegt, wie sie beispielsweise in bevorzugter Ausführungsform in der DE-A-2 902 079 beschrieben ist.

Bei derartigen Katzen-Toiletten stellt sich das Problem, daß die Katzenstreu in regelmäßigen Abständen ausgewechselt werden muß. Ein einfaches Auskippen der Katzen-Toilette in den Mülleimer oder dergleichen ist unhygienisch, wobei Staub- und Geruchsbelästigungen unvermeidbar sind. Es ist daher wünschenswert, die Möglichkeit zu schaffen, bei solchen mit Katzenstreu versehenen Katzen-Toiletten die Katzenstreu nach dem Verschmutzen hygienisch und nicht staubend auswechseln zu können.

Aus der US-A-3 771 493 ist bereits eine Katzen-Toilette bekannt, bei der in das napfförmig ausgebildete Unterteil ein ringförmiges Oberteil aufgesetzt ist. Ein Nachteil dieser bekannten Katzen-Toilette liegt darin, daß der Beutel selbst ohne jedwede Formstabilität ist, so daß es erforderlich ist, diesen mit verhältnismäßig großer Sorgfalt in das Unterteil einzusetzen, um einen zuverlässigen Sitz zu erzielen, da ansonsten die Gefahr besteht, daß beim Herausstülpen des oberen Beutelbereiches über den Umfangsrand des Unterteiles Katzenstreu aus dem Beutel herausfällt. Ähnliche Katzen-Toiletten sind aus der DE-A-2 613 659 und aus der US-A-3 990 396 bekannt, während die DE-A-3 117 900 ein Doppelbeutel zur Fäkalienbeseitigung bei der Haustierhaltung von Kleintieren bekannt ist, der insgesamt nach Benutzung erneut verschlossen und alsdann weggeworfen wird, woraus infolge des verhältnismäßig komplizierten Aufbaus neben den beträchtlichen Herstellungskosten insgesamt ein hoher Materialwaufwand und damit verbundene beträchtliche Kosten resultieren.

Der Erfindung liegt die Aufgabe zugrunde, eine Folienpackung der eingangs genannten Art bzw. eine damit ausrüstbare Katzen-Toilette sowie ein entsprechendes Herstellungsverfahren zu schaffen, die bei preiswerter Herstellbarkeit das hygienisch einandfreie Handhaben sowohl bei Ingebrauchnahme als auch bei der Entsorgung der Katzen-Toilette gewährleisten, wobei insbesondere auf kostengünstige Weise eine möglichst weitgehende automatische Herstellbarkeit gewährleistet sein soll.

Erfindungsgemäß wird diese Aufgabe durch die im Kennzeichen des Patentanspruches 1 aufgeführten Merkmale gelöst. Eine besonders bevorzugte Ausführungsform der Folienpackung, die natürlich auch zur Aufnahme von anderem schüttfähigen Material als Katzenstreu verwendet werden kann, ist Gegenstand des Patentanspruches 2. Das Erfindungsgemäße Verfahren ist Gegenstand des Fatentanspruches 3. Die erfindungsgemäße Verwendung der Folienpackung nach der Erfindung für eine Katzentoilette ist Gegenstand des Patentanspruches 4.

Die erfindungsgemäße Folienpackung ist nicht nur kostengünstig in der Herstellung, indem nämlich die dabei verwendeten, vorzugsweise vollständig aus Kunststoff herstellbaren Beutel auf einfache Weise mit Katzenstreu gefüllt und ohne jedwede Staubbelästigung zum Verbraucher gebracht werden können, sondern gewährleistet auch nach Gebrauch eine einwandfreie, hygienische Entsorgung, indem der betreffende Beutel provisorisch wieder verschlossen wird, gegebenenfalls unter Verwendung eines Verschlußfadens, und dann ohne weiteres in den Mülleimer oder dergleichen gebracht werden kann. Für den Benutzer entfällt damit die bisher lästige Handhabung loser Katzenstreu vollständig.

Natürlich eignet sich die erfindungsgemäß vorgeschlagene Folienpackung nicht nur bei Verwendung für eine Katzentoilette nach der Erfindung, vielmehr allgemein für rieselfähige Güter, wobei auch an andere Tierstreuarten, an Tierfutter etc. zu denken ist.

Nachstehend ist die Erfindung anhand eines Ausführungsbeispieles unter Bezugnahme auf die schematische Zeichnung im einzelnen erläutert. Dabei zeigt:

Fig. 1    eine von einer Vorratsrolle abrollende Folienbahn zum Herstellen eines Ausführungsbeispiels einer Folienpackung nach der Erfindung in perspektivischer Darstellung;

Fig. 2    die Folienbahn von Fig. 1 in der Draufsicht beim Herstellen eines Beutels,

Fig. 3    eine Draufsicht auf die Folienbahn von Fig. 2 von der gegenüberliegenden Seite aus gesehen; und

Fig. 4    in den Einzeldarstellungen a) bis d) das Einsetzen eines Beutels bei einer Katzen-Toilette in das Unterteil sowie das Aufsetzen des Oberteiles nach Öffnen des Beutels in verschiedenen, aufeinanderfolgenden Anwendungsschritten.

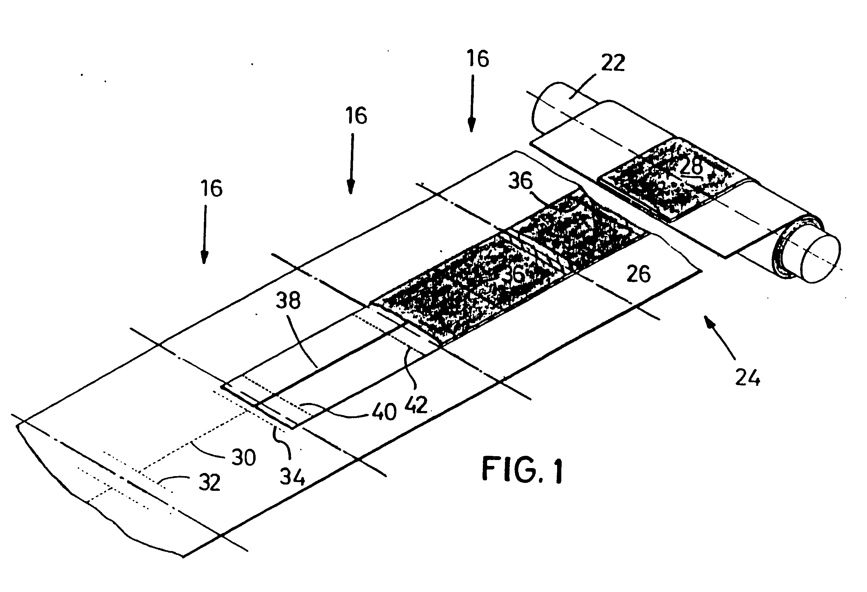

Figur 1 zeigt eine von einer Vorratsrolle 22 abrollende, im ganzen mit 24 bezeichnete zweiteilige Folienbahn, die - natürlich in diesem "Bahnzustand" in ebener Aufklappstellung, Material für eine Außenhülle 26 sowie für einen Innenschlauch 28 trägt. Sowohl die Außenhülle 26 als auch der Innenschlauch 28 bestehen aus Kunststoffolie vorzugsweise unterschiedlicher Farbgebung. Die Außenhülle 26 ist mit Längsperforationen 30 sowie damit jeweils T-förmig in Verbindung stehenden Querperforationen 32, 34 in der aus der Zeichnung ersichtlichen, den herzustellenden Beuteln 16 entsprechenden Anordnung versehen. Der Innenschlauch 28 weist an seiner der Außenhülle 26 abgewandten Seite eine Mittelperforation 36 und an seiner an der Außenhülle 26 anliegenden Seite eine Stoßlinie 38 auf. Die der Stoßlinie 38 benachbarten, aneinander anstoßenden Bereiche des Innenschlauches 28 sind mit der Außenhülle 26 flächig verklebt. Diese an der Außenhülle 26 anliegende Materiallage des Innenschlauches 28 ist mit Querperforationslinien 40, 42 entsprechend den Querperforationen 32, 34 der Außenhülle 26 versehen; zwischen der an der Außenhülle 26 anliegenden Lage des Innenschlauches 28 und der die Stoßlinie 38 und die Querperforationslinien 40, 42 aufweisenden Lage des Innenschlauches 28 besteht eine peel-off-Klebverbindung.

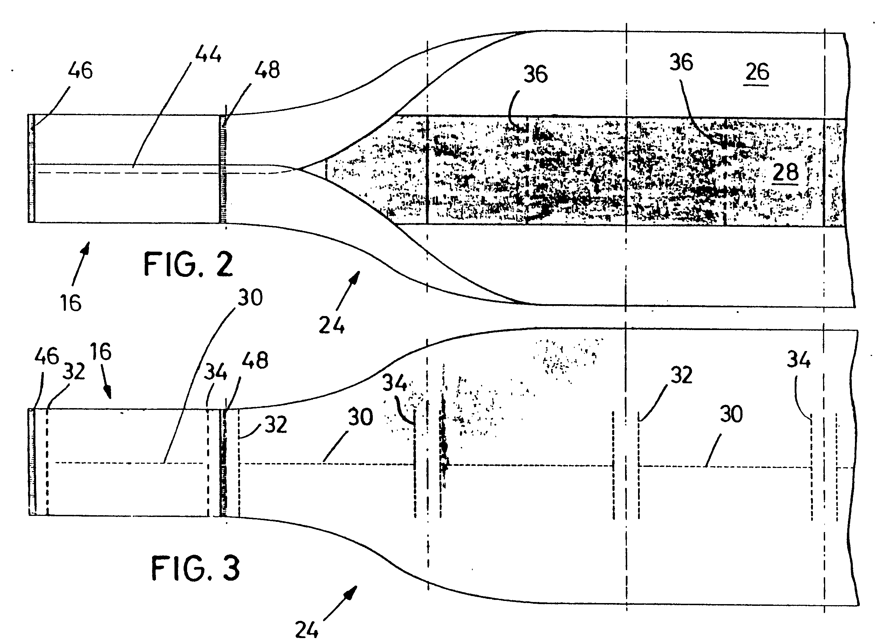

Wie Fig. 2 und 3 erkennen lassen, wird die Folienbahn 24 durch entsprechende Führung zu einem Schlauch mit einem durch Heißsiegelung gebildeten, in Abzugsrichtung der Folienbahn 24 liegenden Verbindungsbereich 44 geformt. Eine Quersiegelnaht 46 ist dann jeweils bereits gebildet, woraufhin der so entstandene, einseitig noch offene Beutel 16 mit der Katzenstreu gefüllt und dann auch mit der weiteren Quersiegelnaht 48 versehen und auf diese Wiese geschlossen wird, wobei die Quersiegelnähte 46, 48 natürlich auch die Längsenden des Innenschlauches 28 miteinander verbinden. In Fig. 2 und Fig. 3 ist dann der so gebildete fertige, verschlossene Beutel jeweils links gezeigt, wobei Fig. 3 die in Gebrauchsstellung des Beutels obenliegende Seite mit der Längsperforation 30 und den Querperforationen 32, 34 wiedergibt.

Fig. 4 läßt dann die Verwendungsweise des erfindungsge mäßen Beutels 16, wie er Gegenstand der Zeichnung ist, erkennen: In a) ist zu sehen, wie der mit der Katzenstreu 14 gefüllte Beutel 16 zunächst in der Weise geöffnet wird, daoß entlang der Längsperforation 30 sowie der Querperforationen 32, 34 die Außenhülle 26 an der Oberseite des Beutels geöffnet wird, wobei infolge der Klebeverbindung die entsprechende Lage des Innenschlauches 28 mit herausgeklappt wird, so daß sich schließlich die in Fig. 4b) gezeigte Konfiguration ergibt, in der also die Außenhülle 26 mit der daran anliegenden Lage des Innenschlauches 28 herausgeklappt ist. Alsdann erfolgt, unter Verwendung der Mittelperforation 36, das Herausklappen der anderen Lage des Innenschlauches 28, so daß schließlich in Fig. 4c) die Katzenstreu 14 offenliegt. Fig. 4d) läßt erkennen, daß der Beutel auf diese Weise leicht in ein kastenförmiges Unterteil 10 eingesetzt werden kann, wobei die Außenhülle 26 bzw. der Innenschlauch 28 den oberen Umfangs rand des Kastens 10 vollständig abdecken. Ein rahmenartiges Oberteil 12, dient dazu, den herausgestülpten Teil des Beutels 16 auf dem oberen Umfangsrand des Unterteiles 10 festzuklemmen. Nach Gebrauch wird das Oberteil 12 abgezogen, woraufhin sich der Beutel leicht durch entsprechenden Hochstülpen der ursprünglich herzustellenden ausgeklappten Abschlußbereichsteile des Beutels 16 zumindest Provisorisch verschließen läßt. Hierdurch ist eine hygienische Entsorgung möglich.

Der in den Fig. 1 bis 4 behandelte Beutel läßt sich besonders kostengünstig und einfach in kontinuierlichen Verfahren mittels entsprechend gestalteter Folienpackmaschinen herstellen und bietet neben seiner rationellen Herstellung optimale Einfachheit in seiner Anwendung.

**Patentansprüche**

1. Folienpackung mit einem Beutel zur Aufnahme von schüttfähigem Material, wie Katzenstreu oder dergleichen, dadurch gekennzeichnet, daß der Beutel (10) eine Außenhülle (26) in Form eines flachgelegten Folienschlauchstückes aufweist, das sowohl an der zwei einander gegenüberliegenden Längsenden als auch entlang eines sich über seine Unterseite von einem zum anderen Ende erstreckenden schmalen Verbindungsbereiches (44) durch Heißsiegeln oder dergleichen verschlossen ist; daß auf der dem Verbindungsbereich (44) gegenüberliegenden Oberlage der Außenhülle (26) eine sich im wesentlichen von einem Längsende zum anderen Längsende parallel zu dem Verbindungsbereich (44) erstreckende, jedoch jeweils mit Abstand vor der jeweiligen Quersiegelnaht (46, 48) endende Längsperforation (30) sowie zwei parallel zu den Quersiegelnähten (46, 48) und nahe diesen verlaufenden Querperforationen (32, 34), mit der Längsperforation (30) T-formig verbunden, vorgesehen sind; und daß an der Innenseite der die Längsperforation (30) und die Querperforationen (32, 34) aufweisenden Oberlage der Außenhülle (26) ein mit seinen Enden mit den Längsenden der Außenhülle (26) in den Quersiegelnähten (46, 48) verbundener flacher Innenschlauch (28) aus Folienmaterial oder dergleichen angeordnet ist, der eine parallel zu der Längsperforation (30) der Oberlage der Außenhülle (26) verlaufende Stoßlinie (38) aufweist, entlang welcher das Innenschlauchmaterial mit der Außenhülle (26) verbunden ist, und der ferner in seiner an der Außenhülle (26) anliegenden, mit der Stoßlinie (38) versehenen Materiallage zwei im wesentlichen den Querperforationen (32, 34) der Außenhülle (26) entsprechende Querperforationslinien (40, 42) und in der der Außenhülle (26) abgewandten Materiallage eine parallel zu den Querperforationslinien (40, 42) liegende Mittelperforation (36) aufweist.

2. Folienpackung nach Anspruch 1, dadurch gekennzeichnet, daß die beiden Lagen des Innenschlauches (28) mittels einer "peel-off"-Klebeverbindung im wesentlichen flächig miteinander verbunden sind.

3. Verfahren zum Herstellen der mit schüttfähigem Material, wie Katzenstreu oder dergleichen, gefüllten Folienpackung nach Anspruch 1 oder 2, dadurch gekennzeichnet, daß eine einseitig mit dem Innenschlauch versehene und wie dieser die entsprechenden Perforationen aufweisende Folienbahn von einer Vorratsrolle abgezogen und unter Bildung eines in Längsrichtung verlaufenden Verbindungsbereichs (44) durch Heißsiegeln zu einem Schlauch geformt wird, der an seinem Ende mit einer Quersiegelnaht (46) verschlossen und mit dem schüttfähigen Material gefüllt wird, und daß anschließend durch Setzen einer zweiten verschließenden Quersiegelnaht (48) und Abtrennen ein Beutel fertiggestellt wird.

4. Verwendung der Folienpackung nach Anspruch 1 bei einer Katzentoilette mit einem Unterteil in Form eines oben offenen rechteckigen Kastens und einem Oberteil in Form eines im wesentlichen rechteckigen Rahmens, wobei der mit Katzenstreu gefüllte auswechselbare Folienpackungsbeutel in das Unterteil eingelegt, geöffnet, mit seinen herausgeklappten Bereichen mittels des Oberteiles auf dem oberen Umfangsrand des Unterteiles gesichert und nach Gebrauchsbeendigung nach Abnehmen des Oberteiles erneut verschlossen sowie gegen einen frischen Beutel ausgewechselt wird.

## Claims

1. Film pack with a bag for receiving pourable material, such as cat litter or the like, characterized in that the bag (10) has an outer envelope (26) in the form of a piece of tubular film laid flat, which is closed by heat sealing or the like both at the two mutually opposite longitudinal ends and along a narrow joining region (44) extending over its underside from one end to the other, in that on the upper ply of the outer envelope (26) opposite the joining region (44) there are provided a longitudinal perforation (30), extending essentially from one longitudinal end to the other longitudinal end parallel to the joining region (44) but ending in each case at a distance before the respective transverse seal seam (46, 48), and two transverse perforations (32, 34), running parallel to the transverse seal seams (46, 48), close to them, and connected to the longitudinal perforation (30) in the form of a T; and in that on the inside of the upper ply of the outer envelope (26) having the longitudinal perforation (30) and the transverse perforations (32, 34) there is arranged a flat inner tube (28) of film material or the like which is joined by its ends to the longitudinal ends of the outer envelope (26) in the transverse seal seams (46, 48) and has a joint line (38), which runs parallel to the longitudinal perforation (30) of the upper ply of the outer envelope (26) and along which the inner tube material is joined to the outer envelope (26), and which furthermore has in its material ply in contact with the outer envelope (26) and provided with the joint line (38) two transverse perforation lines (40, 42), essentially corresponding to the transverse perforations (32, 34) of the outer envelope (26), and in the material ply away from the outer envelope (26) a middle perforation (36) lying parallel to the transverse perforation lines (40, 42.)

2. Film pack according to Claim 1, characterized in that the two plys of the inner tube (28) are joined to each other essentially in surface contact by means of a "peel-off" adhesive band.

3. Process for the production of the film pack filled with pourable material, such as cat litter or the like, according to Claim 1 or 2, characterized in that a sheet of film provided on one side with the inner tube and, like the latter, having the corresponding perforations, is drawn off from a supply roll and, with formation of a joining region (44) running in longitudinal direction, is formed by heat sealing into a tube which is closed at its end with a transverse seal seam (46) and is filled with the pourable material, and in that subsequently a bag is made by setting a second closing transverse seal seam (48) and cutting off.

4. Use of the film pack according to Claim 1 in a cat tray with a lower part in the form of an outwardly open rectangular box and an upper part in the form of an essentially rectangular frame, the exchangeable film pack bag filled with cat litter being placed in the lower part, opened, secured by its unfolded regions by means of the upper part on the upper peripheral edge of the lower part and, after the end of use, reclosed after removing the upper part and exchanged for a fresh bag.

## Revendications

1. Emballage en feuille comportant un sachet pour contenir du matériau en vrac, comme de la litière pour chat ou analogue, caractérisé en ce que le sachet (10) présente une enveloppe (26) sous forme d'une portion de gaine en feuille aplatie qui, aussi bien des deux côtés longitudinaux, opposés l'un à l'autre, que le long d'une étroite zone de liaison (44) qui s'étend sur sa face inférieure, d'une extrémité à l'autre, est fermée par un scellage à chaud ou analogue; en ce que, sur la couche supérieure, située au droit de la zone de liaison (44), de l'enveloppe extérieure (26), sont prévues une perforation longitudinale (30) qui s'étend sensiblement, d'une extrémité longitudinale à l'autre extrémité longitudinale, parallèlement à la zone de liaison (44), mais qui toutefois se termine à une certaine distance de la soudure transversale de scellage respective (46, 48), ainsi que deux perforations transversales (32, 34) qui sont dirigées parallèlement aux soudures transversales de scellement (46, 48), sont proches de celles-ci et sont reliées, en formant un T, à la perforation longitudinale (30); et en ce que sur la face intérieure de la couche supérieure, qui présente la perforation longitudinale (30) et les perforations transversales (32, 34), de l'enveloppe extérieure (26) est disposée une gaine intérieure aplatie (28), en matériau en feuille ou analogue reliée par ses extrémités aux extrémités longitudinales de l'enveloppe extérieure (25) dans les soudures transversales de scellage (46, 48), qui présente une ligne de joint (38) dirigée parallèllement à la perforation longitudinale (30) de la couche supérieure de l'enveloppe extérieure (26) et le long de laquelle le matériau de la gaine intérieure est relié à l'enveloppe extérieure (26), et qui en outre _présente_,

dans sa couche de matériau placée contre l'enveloppe extérieure (26) et munie de la ligne de joint (38), deux lignes de perforation transversales (40, 42) correspondant sensiblement aux perforations transversales (32, 34) de l'enveloppe extérieure (26) et, dans la couche de matériau placée côté opposé à l'enveloppe extérieure (26), une perforation médiane (36) parallèle aux lignes de perforation transversales (40, 42).

2. Emballage en feuille selon la revendication 1, caractérisé en ce que les deux couches de la gaine intérieure (28) sont reliées l'une à l'autre, sensiblement à plat, au moyen d'une liaison par collage pelable.

3. Procédé de fabrication de l'emballage en feuille, selon la revendication 1 ou 2, remplie de matériau en vrac comme de la litière de chat ou analogue, caractérisé en ce qu'on déroule une bande formée de feuilles, munie d'un côté de la gaine intérieure et présentant les perforations correspondant à celles de cette gaine, à partir d'un rouleau de stockage et qu'on la forme, par réalisation d'une zone de liaison (44) dirigée selon la direction longitudinale, en une gaine, que l'on ferme en formant à son extrémité la première soudure transversale de scellage (46) et que l'on remplit du matériau en vrac; et en ce qu'ensuite on achève de fabriquer un sachet en exécutant une seconde soudure transversale de scellage de fermeture (48) et en détachant le sachet.

4. Emploi d'un emballage en feuille selon la revendication 1, dans une toilette pour chat, comportant une partie inférieure en forme de boîte rectangulaire ouverte et une partie supérieure en forme de cadre sensiblement rectangulaire, caractérisé en ce que l'on place dans la partie inférieure le sachet en emballage en feuille remplaçable rempli de litière pour chat; qu'on l'ouvre; qu'on le fixe de façon sûre, par ses zones rabattues, au moyen de la partie supérieure, sur le bord périphérique supérieur de la partie inférieure; et en ce qu'après usage, on le ferme à nouveau après enlèvement de la parti supérieure et qu'on le remplace par un sachet neuf.

FIG.1

FIG. 2

FIG. 3

EP 0 195 221 B1